# EUROPÄISCHE PATENTSCHRIFT

(11) **EP 2 969 665 B1**
(45) Veröffentlichungstag und Bekanntmachung des Hinweises auf die Patenterteilung: **16.08.2017**
(21) Anmeldenummer: 14717106.0
(22) Anmeldetag: 10.03.2014
(51) Int. Cl.: B60R 21/36, B60R 13/08

(54) **GASSACKMODULANORDNUNG FÜR EIN KRAFTFAHRZEUG**
AIRBAG MODULE ASSEMBLY FOR A MOTOR VEHICLE
ENSEMBLE MODULE COUSSIN GONFLABLE DE SÉCURITÉ POUR UN VÉHICULE AUTOMOBILE

(30) Priorität: 11.03.2013 DE 102013204120; 08.04.2013 DE 102013206140
(43) Veröffentlichungstag der Anmeldung: 20.01.2016
(73) Patentinhaber: Takata AG, 63743 Aschaffenburg (DE)
(72) Erfinder: LUBE, Thomas, 13591 Berlin (DE); KALLISKE, Ingo, 14476 Potsdam (DE); STEINKE, Normen, 10785 Berlin (DE); AULBACH, Alexander, 63743 Aschaffenburg (DE)
(74) Vertreter: Maikowski & Ninnemann Patentanwälte Partnerschaft mbB
(86) Internationale Anmeldenummer: PCT/EP2014/054560
(87) Internationale Veröffentlichungsnummer: WO 2014/139937

(56) Entgegenhaltungen:
- EP-A1- 1 977 937
- WO-A1-2009/070059
- DE-A1-102006 034 552
- JP-A- H08 258 669
- JP-A- 2003 252 145
- JP-A- 2004 168 111
- JP-A- 2005 178 587
- US-A1- 2005 205 333
- US-A1- 2009 084 620
- "INSULATION FOR AIR BAG MODULE", RESEARCH DISCLOSURE, MASON PUBLICATIONS, HAMPSHIRE, GB, Nr. 366, 1. Oktober 1994 (1994-10-01), Seite 554, XP000485868, ISSN: 0374-4353

## Beschreibung

Die Erfindung betrifft eine Gassackmodulanordnung für ein Kraftfahrzeug gemäß dem Oberbegriff des Anspruchs 1. DE 10 2006 034 552 A1 offenbart eine Gassackmodulanordnung nach dem Oberbegriff des Anspruchs 1. Eine derartige Gassackmodulanordnung zum Schutz einer Person, die sich außerhalb eines Fahrzeuges befindet, ist z.B. aus der EP 1 349 752 B1 bekannt. Die Gassackanordnung ist z.B. an oder unterhalb einer Motorhaube eines Kraftfahrzeugs angeordnet. Stau- und Strahlungswärme können dort zu einer schnellen temperaturbedingten Alterung der Komponenten der Gassackanordnung führen oder es müssen temperaturbeständige und damit kostenintensive Materialien verwendet werden. Ein weiterer Nachteil ist, dass sich in Abhängigkeit von den einwirkenden Temperaturen die Leistungscharakteristik des Gasgenerators der Gassackanordnung ändert und die durch ihn freigesetzten Gase bei identischen Unfallsituationen in Menge und zeitlichem Verlauf stark voneinander abweichen können, was sich letztendlich in unterschiedlichen Entfaltungsverläufen des Gassackes äußert. Auch kann es bei einer hohen thermischen Belastung zu einer ungewollten Aktivierung des Gasgenerators kommen.

Das der Erfindung zugrundeliegende Problem besteht darin, eine möglichst sichere und kostengünstig herstellbare Gassackanordnung zu schaffen.

Dieses Problem wird durch die Schaffung einer Gassackmodulanordnung mit den Merkmalen gemäß Anspruch 1 gelöst. Weiterbildungen der Erfindung sind in den abhängigen Ansprüchen angegeben.

Die erfindungsgemäße Gassackmodulanordnung ist insbesondere in einem Motorraum des Kraftfahrzeuges angeordnet, wobei die Abtrennung einer thermischen Ankopplung des Gassackmoduls an den übrigen (nicht von der Gassackanordnung belegten) Motorraum so gut wie möglich entgegenwirkt. Insbesondere reduziert die Abtrennung den Wärmetransport von dem Motor des Kraftfahrzeuges zu dem Gassackmodul.

In dem Gehäuse des Gassackmoduls sind insbesondere der Gassack sowie ein Gasgenerator zum Aufblasen des Gassacks untergebracht. Beispielsweise erstreckt sich die Abtrennung auf einer dem Motor des Fahrzeugs zugewandten Seite des Modulgehäuses..

Beispielsweise weist das Gehäuse eine Haupterstreckungsrichtung auf, die in Fahrzeugquerrichtung orientiert ist, wobei es sich bei dem in dem Gehäuse untergebrachten Gasgenerator z.B. um einen länglichen Gasgenerator handelt der parallel zur Fahrzeugquerrichtung angeordnet ist. Möglich ist auch, dass sich die Abtrennung über einen Großteil der Länge des Gehäuses entlang dessen Haupterstreckungsrichtung (also insbesondere längs der Fahrzeugquerrichtung) erstreckt. Insbesondere erstreckt sich die Abtrennung über zumindest im Wesentlichen über die gesamte Länge des Gehäuses.

Die Kontur der Abtrennung folgt z.B. zumindest in einem Querschnitt senkrecht zur Fahrzeugquerrichtung betrachtet (zumindest abschnittsweise) der Außenkontur des Gehäuses. Die Abtrennung ist zumindest abschnittsweise in einem Abstand zu dem Gehäuse angeordnet. Entsprechend ist zwischen der Abtrennung und dem Modulgehäuse zumindest abschnittsweise ein Luftspalt vorhanden, der zur thermischen Entkopplung des Gassackmoduls von dem übrigen Bereich des Motorraums beiträgt. Beispielsweise folgt die Kontur der Abtrennung zumindest abschnittsweise der Außenkontur des Gehäuses derart, dass der Abstand zwischen dem Gehäuse und der Abtrennung zumindest näherungsweise konstant ist.

Gemäß einer weiteren Ausgestaltung der Erfindung ist die Abtrennung einteilig ausgebildet; z.B. als Kunststoffformteil. Denkbar ist, dass es sich bei der Abtrennung um eine im Wesentlichen flache, wenn auch möglicherweise zumindest abschnittsweise gekrümmt verlaufende (an die Außenkontur des Gehäuses angepasste) Struktur handelt. Die Abtrennung weist insbesondere ein thermisch isolierendes Material auf oder besteht aus einem derartigen Material. Beispielsweise weist das Material der Abtrennung eine Wärmeleitfähigkeit von weniger als 1,0 Wm⁻¹K⁻¹ bei 0 °C auf.

Beispielsweise handelt es sich bei dem schlecht wärmeleitenden Material, aus dem die Abtrennung gebildet ist oder das sie aufweist, um ein geschäumtes Material, d.h. ein Material, das Gaseinschlüsse aufweist, die die Wärmeleitfähigkeit des Materials weiter herabsetzen. Zur weiteren Verbesserung der thermisch isolierenden Wirkung der Abtrennung kann sie darüber hinaus mit einem reflektierenden Material (z.B. in Form einer Folie, die etwa aus einem Metall, z.B. Aluminium, ausgebildet ist) versehen, insbesondere beschichtet, sein. Beispielsweise ist das reflektierende Material auf einer dem Gassackmodul abgewandten (d.h. dem Fahrzeugmotor zugewandten) Seite der Abtrennung angeordnet.

Gemäß einer anderen Ausgestaltung der Erfindung weisen die Abtrennung und das Gehäuse des Gassackmoduls Befestigungsstrukturen zum Festlegen am Fahrzeug, z.B. an dessen Motorhaube, auf, wobei die Befestigungsstrukturen so ausgebildet sind, dass die Abtrennung und das Gehäuse über ein gemeinsames Befestigungselement (z.B. in Form einer Schraube oder eines Bolzens) am Fahrzeug festlegbar sind. Insbesondere liegen Abtrennung und Gehäuse im Bereich der Befestigungsstrukturen aneinander an, was jedoch nicht ausschließt, dass zwischen dem Gehäuse und der Abtrennung außerhalb der Befestigungsstrukturen ein Luftspalt existiert, d.h. die Abtrennung und das Gehäuse dort beabstandet voneinander angeordnet sind. Im Bereich der Befestigungsstrukturen kann es einen punktuellen (flächenmäßig geringen) Kontakt zwischen der Abtrennung und dem Gehäuse geben. Auch außerhalb des Bereiches der Befestigungsstrukturen existiert mindestens ein Kontaktbereich, in dem das Gehäuse an der Abtrennung anliegt. Dieser mindestens eine Kontaktbereich wird durch einen als Abstandshalter dienenden (z.B. steg- oder säulenartigen) Vorsprung des Gehäuses und/oder der Abtrennung gebildet. Der Kontaktbereich trägt zur Ausbildung des oben bereits erwähnten Luftspalts zwischen dem Gehäuse und der Abtrennung bei.

Denkbar ist allerdings auch, dass die Abtrennung und das Gehäuse Befestigungsstrukturen aufweisen, die so ausgebildet sind, dass die Abtrennung und das Gehäuse über separate Befestigungselemente am Fahrzeug festlegbar sind. Möglich ist natürlich auch, dass sowohl solche Befestigungsstrukturen vorhanden sind, über die die Abtrennung und das Gehäuse über ein gemeinsames Befestigungselement festlegbar sind, als auch solche, die eine separate (voneinander beabstandete) Befestigung der Abtrennung und des Gehäuses am Fahrzeug (insbesondere an dessen Motorhaube) ermöglichen.

Die Abtrennung ist darüber hinaus insbesondere so beschaffen, dass sie zusammen mit anderen Strukturen des Fahrzeugs einen zumindest im Wesentlichen abgeschlossenen Raum ausbildet, in dem das Gassackmodul angeordnet ist. Beispielsweise wird dieser Raum durch die Wandung eines Wasserkastens, eines Windlaufs und/oder durch die Motorhaube des Fahrzeugs begrenzt. Dabei können zwischen diesen Strukturen Dichtungselemente vorgesehen sein, die den Raum, in dem das Gassackmodul angeordnet ist, (z.B. zumindest näherungsweise hermetisch) abdichten, wodurch das Gassackmodul vor Einwirkung aus der Umgebung (z.B. in Form von Staub und/oder Feuchtigkeit) geschützt ist. Zudem können die Strukturen, zwischen denen die Dichtungselemente angeordnet sind, durch eine entsprechende Ausgestaltung der Dichtelemente (z.B. aus einem schlecht wärmeleitenden Material) thermisch voneinander entkoppelt werden.

Die Erfindung betrifft insbesondere auch ein Fahrzeug mit einer wie oben beschriebenen Gassackmodulanordnung, wobei die Abtrennung wie oben bereits erwähnt zusammen mit Strukturen des Fahrzeugs einen zumindest im Wesentlichen abgeschlossen Raum ausbildet, in dem das Gassackmodul angeordnet ist. Beispielsweise ist zwischen zwei der Strukturen, die den abgeschlossenen Raum ausbilden und die bei einem Öffnen der Motorhaube des Fahrzeugs relativ zueinander bewegt werden, und/oder zwischen der Abtrennung und einer der Strukturen, gegenüber der sich die Abtrennung bei einem Öffnen der Motorhaube des Fahrzeugs bewegt, mindestens ein Dichtelement angeordnet.

Beispielsweise ist mindestens ein Dichtelement zwischen der Wandung eines Wasserkastens oder einem Windlauf des Fahrzeuges und der Abtrennung und/oder zwischen der Wandung eines Wasserkastens oder einem Windlauf und der Motorhaube des Fahrzeugs angeordnet.

Möglich ist auch, dass mindestens ein (erstes) Dichtelement entlang der Windschutzscheibe des Fahrzeugs verläuft. Darüber hinaus kann ein weiteres (zweites) Dichtelement vorgesehen sein, das mindestens einen Abschnitt aufweist, der unter einem Winkel oder senkrecht zu dem ersten Dichtelement verläuft. Insbesondere liegt der unter einem Winkel oder senkrecht zu dem ersten Dichtelement verlaufende Abschnitt des zweiten Dichtelementes mit einem Ende an dem ersten Dichtelement an. Das erste Dichtelement dichtet insbesondere den Motorraum des Fahrzeuges und den Raum, in dem das Gassackmodul angeordnet ist, gegenüber äußeren Umwelteinflüssen (außerhalb des Kraftfahrzeuges) ab, während das zweite Dichtungselement den Modulraum gegenüber dem Motorraum und den dort herrschenden Bedingungen abdichtet.

Gemäß einer anderen Weiterbildung der Erfindung ist das Gassackmodul und/oder die Abtrennung an der Motorhaube (an einer Innenseite der Motorhaube) des Fahrzeugs festgelegt. Hierbei können die Abtrennung und/oder das Gehäuse des Gassackmoduls wie oben bereits erläutert Befestigungsstrukturen aufweisen.

Die Erfindung wird im Folgenden anhand von Ausführungsbeispielen unter Bezugnahme auf die Figuren näher erläutert. Es zeigen:
- Figur 1: eine Draufsicht auf eine im Motorraum eines Fahrzeugs angeordnete Gassackanordnung gemäß einem ersten Ausführungsbeispiel der Erfindung;
- Figur 2: einen Schnitt durch die Gassackanordnung aus Figur 1; und
- Figur 3: eine vergrößerte Schnittansicht einer Gassackanordnung gemäß einem zweiten Ausführungsbeispiel der Erfindung.

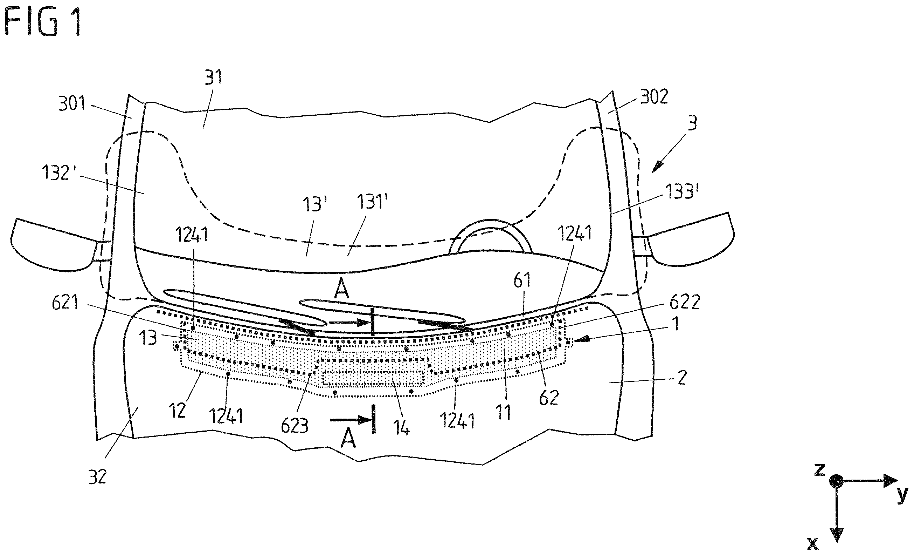

Fig. 1 zeigt in Draufsicht eine erfindungsgemäße Gassackmodulanordnung 1, die in einem Frontalbereich in Form des Motorraums 2 (aufweisend einen Antriebsmotor 21) eines Kraftfahrzeugs 3 untergebracht ist. Die Gassackmodulanordnung 1 weist ein Gassackmodul 11 auf, das im Übergangsbereich zwischen einer Frontscheibe (Windschutzscheibe 31) und einer Abdeckung für den Antriebsmotor in Form einer Motorhaube 32 des Fahrzeugs 3 angeordnet ist. Der Windschutzscheibe 31 schließt sich zum Motorraum 2 des Fahrzeugs 3 hin ein Windlauf und/oder ein Wasserkasten 33 an.

Das komplette Gassackmodul 11 erstreckt sich im nicht aktivierten Zustand unterhalb der Motorhaube 32 und zwar entlang eines der Windschutzscheibe 31 zugewandten Randbereichs der Motorhaube 32, so dass das Gassackmodul 11 seine größte Ausdehnung im Wesentlichen quer zur Fahrzeuglängsrichtung x (Fahrtrichtung) besitzt.

Das Gassackmodul 11 weist zudem ein Gehäuse 12 auf, in dem sich ein gefalteter Gassack 13 (z.B. in Form eines Gassackpakets) sowie ein Gasgenerator 14 zum Aufblasen des Gassacks 13 befinden. Der entfaltete Gassack 13', der vorliegend einen mittleren Bereich 131' und zwei seitliche, die A-Säulen 301, 302 des Fahrzeugs 3 abdeckende Bereiche 132', 133' umfasst, ist in Fig. 1 durch eine gestrichelt dargestellte Kontur angedeutet.

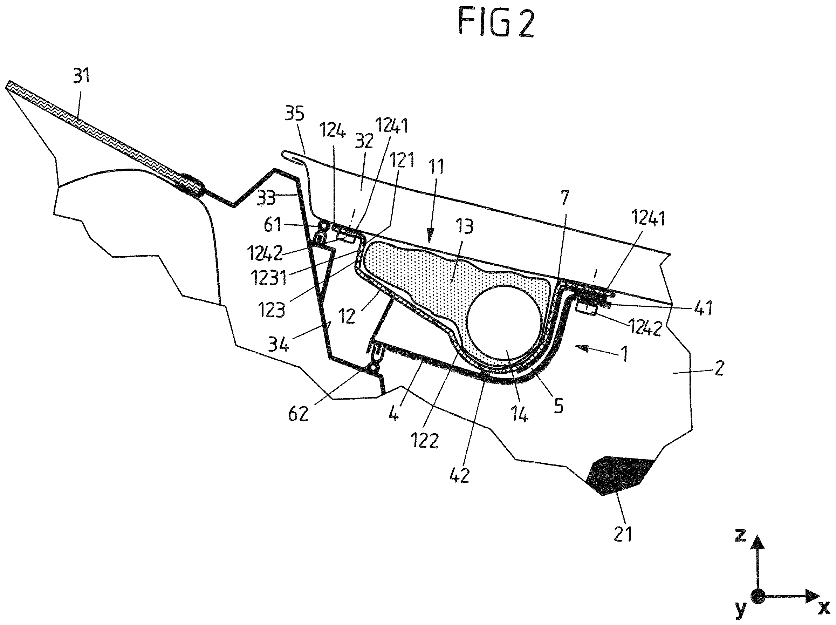

Figur 2 zeigt einen Schnitt entlang der Linie A-A in Fig. 1. Zur Unterbringung des gefalteten Gassacks 13 und des Gasgenerators 14 ist das Modulgehäuse 12 mit einer wannenförmigen Vertiefung 121 versehen. Die Vertiefung 121 wird insbesondere durch einen Bodenabschnitt 122 des Gehäuses 12 sowie durch eine umlaufende und sich vom Bodenabschnitt 122 in Richtung der Motorhaube 32 erstreckende Seitenwand 123 zumindest im Wesentlichen vollständig umrandet. Das Gehäuse 12 weist zudem einen oberen Randabschnitt 124 der sich der umlaufenden Seitenwand 123 anschließt und der zumindest näherungsweise parallel zur Motorhaube 32 verläuft.

Darüber hinaus ist ein vorderer, der Windschutzscheibe 31 zugewandter Bereich (Öffnungsbereich 1231) der Seitenwand 123 so ausgebildet, dass sich der Gassack 13 durch den Öffnungsbereich 1231 hindurch aus dem Motorraum 2 hinaus entfalten kann. Um ein Entfalten des Gassacks 13 nach außen zu ermöglichen, wird die Motorhaube 32 bei Aktivieren des Gassackmoduls 11 angehoben und z.B. der Öffnungsbereich 1231 aktiv oder passiv (durch den expandierenden Gassack) geöffnet.

Die wannenförmige Vertiefung 121 wird - bezogen auf den in den Figuren 1 und 2 dargestellten im Fahrzeug 3 verbauten Zustand des Gassackmoduls 11 - durch die Motorhaube 32 abgedeckt (verschlossen). Insbesondere ist das Gehäuse 12 an der Motorhaube 32 festgelegt, wobei sein oberer Randabschnitt 124 Befestigungsstrukturen (definierte Befestigungspunkte) in Form von Durchgangsöffnungen 1241 aufweist, durch die Befestigungselemente 1242 (z.B. Schraub-, Rast-, Nietelemente) hindurchgreifen und das Gehäuse 12 an der Motorhaube 32 festlegen.

Die Gassackmodulanordnung 1 weist des Weiteren eine Abtrennung in Form einer Ummantelung 4 auf, die einen Teilabschnitt des Gassackmoduls 11 umgibt. Die Ummantelung 4 ist so beschaffen und angeordnet, dass sie einer thermischen Ankopplung des Gassackmoduls 11 an den Motorraum 2 (d.h. an den nicht von dem Gassackmodul 11 belegten Bereich des Motorraums 2) entgegenwirkt. Insbesondere erfolgt eine räumliche Abtrennung des Gassackmoduls 11 vom Motorraum 2, wodurch die Einwirkung der beim Betrieb des Antriebsmotors 21 im Motorraum 2 entstehenden Temperaturen auf das Gassackmodul 11 reduziert wird.

Die Ummantelung 4 besteht z.B. aus einem thermisch isolierenden Material mit möglichst geringem Wärmedurchgangskoeffizienten und/oder mit möglichst geringer Wärmeleitfähigkeit λ (z.B. weniger als 1,0 Wm⁻¹k⁻¹ bei 0 °C). Beispielsweise kann die Ummantelung 4 aus Polyamid PA 6.6 bestehen, welches zur Verbesserung der mechanischen Eigenschaften Beimengungen aus Glas- bzw. Mineralfasern enthalten kann. Weiterhin kann die Ummantelung 4 beispielsweise ein geschäumtes Material aufweisen oder ist aus einem solchen Material gebildet, wobei Gaseinschlüsse in dem Material den Wärmedurchgang zusätzlich reduzieren. Zur weiteren Verbesserung der thermisch isolierenden Wirkung kann die Ummantelung 4 zusätzlich auf ihrer dem Motorraum 2 zugewandten Seite mit einem die Strahlungswärme reflektierenden Material beschichtet oder mit einer entsprechen Folie (z.B. Aluminiumfolie) versehen sein.

Die Kontur der Ummantelung 4 ist Ausführungsbeispiel der Fig. 1 und 2 teilweise der Außenkontur des Gehäuses 12 angepasst (nicht zwingend erforderlich) und teilweise beabstandet zu diesem angeordnet, so dass ein Luftspalt 5 zwischen der Ummantelung 4 und dem Gehäuse 12 entsteht. Der Luftspalt 5 dient zur weiteren Reduzierung des Wärmeeintrages in das Gassackmodul 11.

Die teilweise beabstandete Anordnung von Ummantelung 4 und Gehäuse 12 schließt jedoch einen punktuellen oder abschnittsweisen (insbesondere flächenmäßig geringen) Kontakt zwischen diesen Teilen nicht aus. Ein solcher Kontakt entsteht beispielsweise, wenn, wie in Fig. 2 dargestellt, die Ummantelung 4 zusammen mit dem Gassackmodul 11 (insbesondere dem Gehäuse 12), d.h. über ein gemeinsames Befestigungselement 1242, an der Motorhaube 32 festgelegt wird. Hierfür weist die Ummantelung 4 zumindest eine Befestigungsstruktur in Form einer Befestigungsöffnung 41 auf, die mit einer Befestigungsöffnung 1241 des Gehäuses 12 fluchtet und die entsprechend ebenfalls von einem der Befestigungselemente 1242 durchgriffen wird.

Darüber hinaus weist die Ummantelung 4 mindestens einen Vorsprung 42 (als Kontaktbereich) auf, über den die Ummantelung 4 an einer Außenseite des Gehäuses 12 anliegt. Der Vorsprung 42 dient als Abstandshalter, um ein Anliegen der Ummantelung 4 an dem Gehäuse 12 zu verhindern. Insbesondere ist der Vorsprung 42 so ausgestaltet, dass der Abstand zwischen dem Gehäuse 12 und der Ummantelung 4 zumindest zwischen dem Vorsprung 42 und der Befestigungsöffnung 41 zumindest näherungsweise konstant ist (d.h. der Luftspalt 5 eine zumindest näherungsweise konstante Dicke aufweist). Denkbar ist auch, dass zusätzlich oder alternativ das Gehäuse 12 mindestens einen derartigen Vorsprung aufweist.

Alternativ oder zusätzlich zu der thermisch isolierenden Ummantelung 4 kann das Gehäuse 12 zumindest teilweise mit einer thermisch isolierenden Beschichtung (s.o.) versehen sein, die insbesondere auf einer Außenseite (dem Gasgenerator 14 abgewandten Seite) des Gehäuses 12 angeordnet ist.

Des Weiteren kann über das Befestigungselement 1242 ein Verstärkungsblech 7 mit der Motorhaube 32 verbunden sein. Das Verstärkungsblech 7 ist benachbart zum Gasgenerator 14 angeordnet und dient zur Verstärkung des Gehäuses 12 in diesem Bereich, der besonders bei der Aktivierung des Gasgenerators 14 erhöhten Belastungen widerstehen muss. Das Verstärkungsblech 7 ist z.B. derart ausgelegt, dass es gleichzeitig der Befestigung des Gasgenerators 14 (und somit des Gassackes 13) am Gehäuse 12 dient.

Um den Wärmeeintrag in das Gassackmodul 11 über die Motorhaube 32 zu reduzieren, können die Befestigungselemente 1242 auf ihrer dem Motorraum 2 zugewandten Seite mit thermisch isolierenden Abdeckungen (z.B. Kunststoffkappen) versehen werden.

Zusammen mit Teilen der Motorhaube 32, des Windlaufes und/oder des Wasserkasten 33 (bzw. daran angeordneten Anbauteilen) stellt die Ummantelung 4 insbesondere einen (bei geschlossener Motorhaube 32) abgeschlossenen (separaten) Raum (Modulraum 34) bereit, in dem sich die Gassackmodulanordnung 1 befindet.

Zwischen Fahrzeugstrukturen, die den Modulraum 34 bereitstellen (begrenzen) und die bei einer Öffnungsbewegung der Motorhaube 32 relativ zueinander bewegt werden, sind Dichtungselemente 61, 62 angeordnet; vorliegend ein erstes Dichtungselement 61 zwischen der Motorhaube 3 und dem Windlauf/Wasserkasten 33 und ein zweites Dichtungselement 62 zwischen der Ummantelung 4 und dem Windlauf/Wasserkasten 33. Die Dichtungselemente 61, 62 dichten den Modulraum 34 insbesondere zumindest nahezu hermetisch ab, so dass das Gassackmodul 11 auch vor Umgebungseinflüssen (Staub, Feuchtigkeit) geschützt ist. Auch werden die Strukturen, zwischen denen die Dichtelemente 61, 62 angeordnet sind, thermisch voneinander entkoppelt.

Das erste Dichtungselement 61 verläuft annähernd parallel zu einem der Windschutzscheibe 31 zugewandten Randbereich 35 der Motorhaube 32 und dichtet den Motorraum 2 und den Modulraum 34 gegenüber außerhalb des Kraftfahrzeugs 3 herrschenden Umwelteinflüssen ab. Das zweite Dichtungselement 62 weist zwei seitliche Abschnitte 621, 622 auf, die sich abgewinkelt gegenüber einem mittleren Bereich 623 erstrecken. Die seitlichen Abschnitte 621, 622 grenzen mit ihrem jeweiligen Ende an das erste Dichtungselement 61 an oder liegen an dem ersten Dichtungselement 61 an (vgl. Fig. 1). Hierdurch erfolgt eine Abdichtung des Modulraums 34 gegenüber dem Motorraum 2 und den von dort herrührenden Einflüssen.

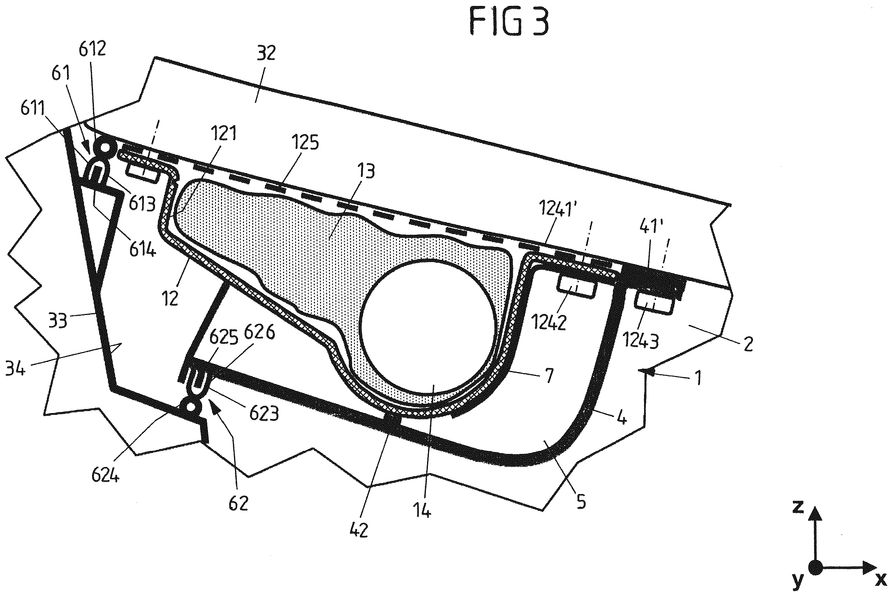

Die Dichtungselemente 61, 62 weisen zudem jeweils einen Befestigungsabschnitt 611, 623 und einen (einstückig mit dem Befestigungsabschnitt 611, 623 ausgeformten) Dichtungsabschnitt 612, 624 auf (siehe Fig. 3). Über den Befestigungsabschnitt 611, 623 sind die Dichtungselemente 61, 62 an Teilen der Begrenzung des Modulraumes 34 festgelegt (z.B. geklemmt); das erste Dichtungselement 61 etwa am Wasserkasten/Windlauf 33 oder an daran angeordneten Anbauteilen und das zweite Dichtungselement 62 an der Ummantelung 4. Beispielsweise weisen die den Modulraum 34 begrenzenden Strukturen (d.h. insbesondere der Wasserkasten/Windlauf 33, die Motorhaube 32 und/oder die Ummantelung 4) korrespondierend zu den Befestigungsabschnitten 611, 623 der Dichtungselemente 61, 62 ausgebildete Strukturen auf. Vorliegend sind der Wasserkasten/Windlauf 33 und die Ummantelung 4 mit abstehenden Stegen 613, 625 versehen, die in eine nutartige Öffnung 614, 626 der Befestigungsabschnitte 611, 623 eingreifen.

Der Dichtungsabschnitt 612, 624 der Dichtungselemente 61, 62 dichtet den Modulraum 34 ab, wobei der Dichtungsabschnitt 612 des ersten Dichtungselementes 61 an der Motorhaube 32 und der Dichtungsabschnitt 624 des zweiten Dichtungselementes 62 am Wasserkasten/Windlauf 33 anliegt. Falls anstelle der Ummantelung 4 lediglich das Gehäuse 12 mit einer thermisch isolierenden Beschichtung versehen wird, kann das Dichtungselement 62 zwischen dem Gehäuse 12 und dem Windlauf/Wasserkasten 33 angeordnet werden. In diesem Fall könnte entsprechend das Gehäuse 12 den Steg 625 ausbilden.

Es wird darauf hingewiesen, dass die dargestellte Ausgestaltung und Anordnung der beiden Dichtungselemente 61, 62 lediglich beispielhaft zu verstehen ist. Etwa ist jeweils auch eine gedrehte Anordnung der Dichtungselemente 61, 62 möglich; z.B. derart, dass das zweite Dichtungselement 62 am Wasserkasten/Windlauf 33 festgelegt ist und mit dem Dichtungsabschnitt 624 an der Ummantelung 4 anliegt.

Fig. 3 zeigt einen vergrößerten Ausschnitt einer erfindungsgemäßen Gassackmodulanordnung, die gegenüber der in Fig. 2 dargestellten Anordnung teilweise modifiziert ist. Insbesondere erfolgt die Befestigung der Ummantelung 4 an der Motorhaube 32 nicht zusammen mit der Befestigung des Modulgehäuses 12 über ein gemeinsames Befestigungselement. Vielmehr ist die Ummantelung 4 so gestaltet, dass ihre Befestigungsöffnung 41' gegenüber der Befestigungsöffnung 1241' des Gehäuses 12 nach außen (von dem Gasgenerator 14 weg) versetzt ist. Entsprechend werden zur Befestigung der Ummantelung 4 und des Modulgehäuses 12 zwei separate Befestigungselemente 1242, 1243 verwendet.

Weiterhin kann die wannenförmige Vertiefung 121 (und damit der gefaltete Gassack 13) des Modulgehäuses 12 auf der der Motorhaube 32 zugewandten Seite mit einer Abdeckung 125 verschlossen sein, welche sowohl eine abdichtende als auch wärmeisolierende Wirkung ausüben kann und z.B. aus einem Kunststoff ausgebildet ist. Die Abdeckung 125 kann (z.B. auch einstückig) mit dem Gehäuse 12 verbunden sein. Handelt es sich bei der Abdeckung 125 um ein vom Gehäuse 12 verschiedenes Teil, kann sie z.B. bereits vor der Montage des Gassackmoduls 11 an der Motorhaube 32 an dem Gehäuse 12 angeordnet werden. Alternativ dazu ist es möglich, dass die Abdeckung 125 vor der Montage des Gassackmoduls 11 am Fahrzeug (an der Motorhaube 32) als separates Teil an der Motorhaube 32 befestigt wird. Die Abdeckung 125 könnte analog auch in der Gassackmodulanordnung der Fig. 1 und 2 verwendet werden.

Der Erfindungsgegenstand wurde oben zwar im Zusammenhang mit einer Befestigung des Gassackmoduls an einer Motorhaube beschrieben. Bei entsprechender Auslegung ist jedoch auch eine Festlegung des Gassackmoduls an anderen Teilen im Motorraum, z.B. dem Wasserkasten/Windlauf 33, möglich. In einem solchen Fall ist das Gassackmodul 11 fahrzeugfest angeordnet und wird beim Öffnen der Motorhaube 32 nicht bewegt.

### Bezugszeichenliste

- 1: Gassackmodulanordnung
- 2: Motorraum
- 3: Fahrzeug
- 4: Abtrennung in Form einer Ummantelung
- 5: Luftspalt
- 7: Klemmblech
- 11: Gassackmodul
- 12: Gehäuse
- 13, 13': Gassack
- 14: Gasgenerator
- 21: Antriebsmotor
- 31: Windschutzscheibe
- 32: Motorhaube
- 33: Wasserkasten/Windlauf
- 34: Modulraum
- 35: Randbereich
- 41, 41': Befestigungsöffnung
- 42: Vorsprung
- 61, 62: Dichtelement
- 121: Vertiefung
- 122: Bodenabschnitt
- 123: Seitenwand
- 124: Randabschnitt
- 125: Abdeckung
- 131': mittlerer Bereich
- 132', 133': seitlicher Bereich
- 301, 302: A-Säule
- 611, 623: Befestigungsabschnitt
- 612, 624: Dichtungsabschnitt
- 613, 625: Steg
- 614, 626: nutartige Öffnung Befestigungsabschnitt
- 621, 622: seitlicher Abschnitt
- 1231: Öffnungsbereich
- 1241, 1241': Befestigungsöffnung
- 1242, 1243: Befestigungselement

## Patentansprüche

1. Gassackmodulanordnung (1) für ein Kraftfahrzeug (3), mit
- einem Gassackmodul (11), das einen Gassack (13) umfasst, der zum Schutz einer sich außerhalb des Kraftfahrzeugs (3) befindlichen Person entlang zumindest eines Teilabschnitts einer Frontscheibe (31) des Kraftfahrzeugs (3) entfaltbar ist; und
- einer Abtrennung (4), die einer thermischen Ankopplung des Gassackmoduls (11) an einen Motorraum (2) des Kraftfahrzeugs (3) entgegenwirkt, wobei
- die Abtrennung (4) ein Gehäuse (12) des Gassackmoduls (11) zumindest teilweise umgibt, wobei die Kontur der Abtrennung (4) zumindest abschnittsweise der Außenkontur des Gehäuses (12) folgt,
**dadurch gekennzeichnet, dass**
das Gehäuse (12) und/oder die Abtrennung (4) mindestens einen Vorsprung (42) aufweisen, über den die Abtrennung (4) an dem Gehäuse (12) anliegt und der als Abstandhalter dient, um einen Luftspalt (5) zwischen dem Gehäuse (12) und der Abtrennung (4) auszubilden.

2. Gassackmodulanordnung nach Anspruch 1, **dadurch gekennzeichnet, dass** das Gehäuse (12) eine Haupterstreckungsrichtung aufweist, die in Fahrzeugquerrichtung orientiert ist.

3. Gassackmodulanordnung nach Anspruch 1 oder 2, **dadurch gekennzeichnet, dass** sich die Abtrennung (4) über einen Großteil der Länge des Gehäuses (12) entlang dessen Haupterstreckungsrichtung erstreckt.

4. Gassackmodulanordnung nach einem der vorhergehenden Ansprüche, **dadurch gekennzeichnet, dass** die in einem Querschnitt senkrecht zur Fahrzeugquerrichtung betrachtete Kontur der Abtrennung (4) zumindest abschnittsweise der Außenkontur des Gehäuses (12) folgt.

5. Gassackmodulanordnung nach einem der vorhergehenden Ansprüche, **dadurch gekennzeichnet, dass** die Kontur der Abtrennung (4) zumindest abschnittsweise der Außenkontur des Gehäuses (12) derart folgt, dass der Abstand zwischen dem Gehäuse (12) und der Abtrennung (4) zumindest näherungsweise konstant ist.

6. Gassackmodulanordnung nach einem der vorhergehenden Ansprüche, **dadurch gekennzeichnet, dass** die Abtrennung (4) ein thermisch isolierendes Material aufweist oder aus einem solchen Material besteht.

7. Gassackmodulanordnung nach einem der vorhergehenden Ansprüche, **dadurch gekennzeichnet, dass** die Abtrennung (4) und das Gehäuse (12) Befestigungsstrukturen (41, 1241) aufweisen, die so ausgebildet sind, dass die Abtrennung (4) und das Gehäuse (12) über ein gemeinsames Befestigungselement (1242) am Fahrzeug (3) festlegbar sind.

8. Gassackmodulanordnung nach einem der vorhergehenden Ansprüche, **dadurch gekennzeichnet, dass** die Abtrennung (4) und das Gehäuse (12) Befestigungsstrukturen (41', 1241') aufweisen, die so ausgebildet sind, dass die Abtrennung (4) und das Gehäuse (12) über separate Befestigungselemente (1242, 1243) am Fahrzeug (3) festlegbar sind.

9. Fahrzeug mit einer Gassackmodulanordnung nach einem der vorhergehenden Ansprüche, **dadurch gekennzeichnet, dass** die Abtrennung (4) zusammen mit Strukturen des Fahrzeugs (3) einen zumindest im Wesentlichen abgeschlossen Raum (34) ausbildet, in dem das Gassackmodul (11) angeordnet ist.

10. Fahrzeug nach Anspruch 9, **dadurch gekennzeichnet, dass** der Raum (34), in dem das Gassackmodul (11) angeordnet ist, durch die Wandung eines Wasserkastens (33), eines Windlaufs und/oder durch die Motorhaube (32) des Fahrzeugs (3) begrenzt ist.

11. Fahrzeug nach Anspruch 9 oder 10, **dadurch gekennzeichnet, dass** zwischen zwei der Strukturen, die den abgeschlossenen Raum (34) ausbilden und die bei einem Öffnen der Motorhaube (32) des Fahrzeugs (3) relativ zueinander bewegt werden, und/oder zwischen der Abtrennung (4) und einer der Strukturen, gegenüber der sich die Abtrennung (4) bei einem Öffnen der Motorhaube (32) des Fahrzeugs (3) bewegt, mindestens ein Dichtelement (61, 62) angeordnet ist.

12. Fahrzeug nach Anspruch 11, **dadurch gekennzeichnet, dass** mindestens ein Dichtelement (61, 62) zwischen der Wandung eines Wasserkastens (33) oder einem Windlauf des Fahrzeugs (3) und der Abtrennung (4) und/oder zwischen der Wandung eines Wasserkastens (33) oder einem Windlauf und der Motorhaube (32) des Fahrzeugs (3) angeordnet ist.

13. Fahrzeug nach Anspruch 11 oder 12, **dadurch gekennzeichnet, dass** mindestens ein erstes Dichtelement (61) entlang der Windschutzscheibe (31) des Fahrzeugs (3) verläuft.

14. Fahrzeug nach Anspruch 13, **dadurch gekennzeichnet, dass** mindestens ein zweites Dichtelement (62) vorgesehen ist, das mindestens einen Abschnitt (621, 622) aufweist, der unter einem Winkel oder senkrecht zu dem ersten Dichtelement (61) verläuft.

15. Fahrzeug nach einem der Ansprüche 9 bis 14, **dadurch gekennzeichnet, dass** das Gassackmodul (11) und/oder die Abtrennung (4) an der Motorhaube (32) des Fahrzeugs (3) festgelegt sind.

## Claims

1. Airbag module arrangement (1) for a motor vehicle (3), having
- an airbag module (11) which comprises an airbag (13) which can be deployed along at least one part section of a front windscreen (31) of the motor vehicle (3) in order to protect a person who is situated outside the motor vehicle (3); and
- a partition (4) which counteracts a thermal coupling of the airbag module (11) to an engine compartment (2) of the motor vehicle (3),
- the partition (4) surrounding a housing (12) of the airbag module (11) at least partially, the contour of the partition (4) following the outer contour of the housing (12) at least in sections,
**characterized in that** the housing (12) and/or the partition (4) have/has at least one projection (42), via which the partition (4) rests against the housing (12) and which acts as a spacer element, in order to form an air gap (5) between the housing (12) and the partition (4).

2. Airbag module arrangement according to Claim 1, **characterized in that** the housing (12) has a main extent direction which is oriented in the vehicle transverse direction.

3. Airbag module arrangement according to Claim 1 or 2, **characterized in that** the partition (4) extends over a large part of the length of the housing (12) along its main extent direction.

4. Airbag module arrangement according to one of the preceding claims, **characterized in that** the contour of the partition (4), as viewed in cross section perpendicularly with respect to the vehicle transverse direction, follows the outer contour of the housing (12) at least in sections.

5. Airbag module arrangement according to one of the preceding claims, **characterized in that** the contour of the partition (4) follows the outer contour of the housing (12) at least in sections, in such a way that the spacing between the housing (12) and the partition (4) is at least approximately constant.

6. Airbag module arrangement according to one of the preceding claims, **characterized in that** the partition (4) has a thermally insulating material or consists of a material of this type.

7. Airbag module arrangement according to one of the preceding claims, **characterized in that** the partition (4) and the housing (12) have fastening structures (41, 1241) which are configured in such a way that the partition (4) and the housing (12) can be fixed on the vehicle (3) via a common fastening element (1242).

8. Airbag module arrangement according to one of the preceding claims, **characterized in that** the partition (4) and the housing (12) have fastening structures (41', 1241') which are configured in such a way that the partition (4) and the housing (12) can be fixed on the vehicle (3) via separate fastening elements (1242, 1243).

9. Vehicle having an airbag module arrangement according to one of the preceding claims, **characterized in that**, together with structures of the vehicle (3), the partition (4) forms an at least substantially closed space (34), in which the airbag module (11) is arranged.

10. Vehicle according to Claim 9, **characterized in that** the space (34), in which the airbag module (11) is arranged, is delimited by the wall of a water tank (33), a cowl and/or by the engine bonnet (32) of the vehicle (3).

11. Vehicle according to Claim 9 or 10, **characterized in that** at least one sealing element (61, 62) is arranged between two of the structures which configure the closed space (34) and are moved relative to one another during opening of the engine bonnet (32) of the vehicle (3), and/or between the partition (4) and one of the structures, with respect to which the partition (4) moves during opening of the engine bonnet (32) of the vehicle (3).

12. Vehicle according to Claim 11, **characterized in that** at least one sealing element (61, 62) is arranged between the wall of a water tank (33) or a cowl of the vehicle (3) and the partition (4) and/or between the wall of a water tank (33) or a cowl and the engine bonnet (32) of the vehicle (3).

13. Vehicle according to Claim 11 or 12, **characterized in that** at least one first sealing element (61) runs along the windscreen (31) of the vehicle (3).

14. Vehicle according to Claim 13, **characterized in that** at least one second sealing element (62) is provided which has at least one section (621, 622) which runs at an angle or perpendicularly with respect to the first sealing element (61).

15. Vehicle according to one of Claims 9 to 14, **characterized in that** the airbag module (11) and/or the partition (4) are/is fixed on the engine bonnet (32) of the vehicle (3).

## Revendications

1. Ensemble module de coussin gonflable de sécurité (1) pour un véhicule automobile (3), avec :
- un module de coussin gonflable de sécurité (11) comprenant un coussin gonflable de sécurité (13) pouvant se déplier pour la protection d'une personne se trouvant à l'extérieur du véhicule automobile (3) le long d'au moins une section partielle d'une vitre avant (31) du véhicule automobile (3) ; et
- une séparation (4) contrecarrant un accouplement thermique du module de coussin gonflable de sécurité (11) à un espace moteur (2) du véhicule automobile (3) ;
- la séparation (4) entourant au moins en partie un carter (12) du module de coussin gonflable de sécurité (11), le contour de la séparation (4) suivant au moins sur une partie le contour extérieur du carter (12) ; **caractérisé en ce que** :
le carter (12) et/ou la séparation (4) comportent au moins une saillie (42) au-dessus de laquelle la séparation (4) bute contre le carter (12) et servant d'entretoise pour former un interstice d'air entre le carter (12) et la séparation (4).

2. Ensemble module de coussin gonflable de sécurité selon la revendication 1, **caractérisé en ce que** le carter (12) comporte une direction principale d'extension orientée dans la direction transversale de véhicule.

3. Ensemble module de coussin gonflable de sécurité selon la revendication 1 ou 2, **caractérisé en ce que** la séparation (4) s'étend sur une grande partie de la longueur du carter (12) le long de sa direction principale d'extension.

4. Ensemble module de coussin gonflable de sécurité selon l'une quelconque des revendications précédentes, **caractérisé en ce que** le contour de la séparation (4) considéré dans une section transversale perpendiculairement à la direction de véhicule transversale suit au moins sur une partie le contour extérieur du carter (12).

5. Ensemble module de coussin gonflable de sécurité selon l'une quelconque des revendications précédentes, **caractérisé en ce que** le contour de la séparation (4) suit au moins sur une partie le contour extérieur du carter (12) de telle sorte que la distance entre le carter (12) et la séparation (4) soit au moins approximativement constante.

6. Ensemble module de coussin gonflable de sécurité selon l'une quelconque des revendications précédentes, **caractérisé en ce que** la séparation (4) comporte une matière thermiquement isolante ou se compose d'une telle matière.

7. Ensemble module de coussin gonflable de sécurité selon l'une quelconque des revendications précédentes, **caractérisé en ce que** la séparation (4) et le carter (12) comportent des structures de fixation (41, 1241) réalisées de telle sorte que la séparation (4) et le carter (12) puissent être fixés au véhicule (3) via un élément de fixation (1242) commun.

8. Ensemble module de coussin gonflable de sécurité selon l'une quelconque des revendications précédentes, **caractérisé en ce que** la séparation (4) et le carter (12) comportent des structures de fixation (41', 1241') réalisées de telle sorte que la séparation (4) et le carter (12) puissent être fixés au véhicule (3) via des éléments de fixation (1242, 1243) séparés.

9. Véhicule avec un ensemble module de coussin gonflable de sécurité selon l'une quelconque des revendications précédentes, **caractérisé en ce que** la séparation (4) forme, conjointement avec les structures du véhicule (3), un espace (34) au moins pour l'essentiel fermé dans lequel le module de coussin gonflable de sécurité (11) est disposé.

10. Véhicule selon la revendication 9, **caractérisé en ce que** l'espace (34) dans lequel le module de coussin gonflable de sécurité (11) est disposé est délimité par la paroi d'un réservoir d'eau (33), d'un tablier et/ou par le capot moteur (32) du véhicule (3).

11. Véhicule selon la revendication 9 ou 10, **caractérisé en ce qu'**au moins un élément d'étanchéité (61, 62) est disposé entre deux des structures formant l'espace (34) fermé et déplacées lors de l'ouverture du capot moteur (32) du véhicule (3) l'une par rapport à l'autre et/ou entre la séparation (4) et une des structures par rapport à laquelle la séparation (4) est déplacée lors d'une ouverture du capot moteur (32) du véhicule (3).

12. Véhicule selon la revendication 11, **caractérisé en ce qu'**au moins un élément d'étanchéité (61, 62) est disposé entre la paroi d'un réservoir d'eau (33) ou un tablier du véhicule (3) et la séparation (4) et/ou entre la paroi d'un réservoir d'eau (33) ou un tablier et le capot moteur (32) du véhicule (3).

13. Véhicule selon la revendication 11 ou 12, **caractérisé en ce qu'**au moins un premier élément d'étanchéité (61) s'étend le long du pare-brise (31) du véhicule (3).

14. Véhicule selon la revendication 13, **caractérisé en ce qu'**au moins un deuxième élément d'étanchéité (62) est prévu comportant au moins une section (621, 622) s'étendant selon un angle ou perpendiculairement au premier élément d'étanchéité (61).

15. Véhicule selon l'une quelconque des revendications 9 à 14, **caractérisé en ce que** le module de coussin gonflable de sécurité (11) et/ou la séparation (4) sont fixés au capot moteur (32) du véhicule (3).
